# EUROPÄISCHE PATENTANMELDUNG

(11) **EP 1 282 081 A2**
(43) Veröffentlichungstag der Anmeldung: **05.02.2003**
(21) Anmeldenummer: 02017029.6
(22) Anmeldetag: 27.07.2002
(51) Int. Cl.: G07C 9/00

(54) **Asynchrones Kommunikationsprotokoll für elektronische Schlüssel von Schlössern und Sicherheitssystemen**

(30) Priorität: 03.08.2001 ES 200101831
(71) Anmelder: Talleres De Escoriaza, S.A., 20305 Irun (Guipuzcoa) (ES)
(72) Erfinder: Tejedor Ruiz, José Agustin, 48940 Leioa (Guipuzcoa) (ES)
(74) Vertreter: Feldkamp, Rainer, Dipl.-Ing.

(57) **Zusammenfassung**

Bei einem asynchronen Kommunikationsprotokoll für elektronische Schlüssel von Schlössern und Sicherheitssystemen wird der gleiche und einzige Kanal für die Übertragung des Taktes und der Daten (Bits) verwendet. Dieser einzige Kanal weist zwei Zustände auf: einen normalen Ruhezustand und einen anderen, aktiven Zustand, wenn eine Kommunikation vorliegt. Ein aktiver Impuls wird zur Anzeige des Beginns eines Bits verwendet. Ein aktiver Impuls wird zur Anzeige der Übertragung eines 1-Bits verwendet, während ein Ruhezustand für die Übertragung eines 0-Bits verwendet wird. Der aktive Impuls besteht in dem Halten des Kommunikationskanals in dem aktiven Zustand während einer kurzen Zeitperiode. Ein Ruhezustand wird zur Ableitung von Energie von dem Kommunikationskanal verwendet, wobei ein aktiver Zustand nicht die Aufrechterhaltung eines bestimmten Energiepegels behindert, der für eine einwandfreie Funktionsweise der mit dem Kommunikationskanal verbundenen Ausrüstungen ausreicht.

## Beschreibung

### Gebiet der Erfindung

Die vorliegende Erfindung bezieht sich auf ein asynchrones Kommunikationsprotokoll für elektronische Schlüssel von Schlössern und Sicherheitssystemen der im Oberbegriff des Anspruchs 1 genannten Art.

### Stand der Technik

Die Systeme von elektronischen Schlössern, die auf elektronischen Schlüsseln mit Kontakten beruhen, erfordern den Austausch von Daten zwischen dem Schloß und dem Schlüssel. Die Daten bestehen aus Bits, die entsprechend einer Norm oder einem Protokoll ausgesandt werden, das vorher zwischen den beiden Ausrüstungen vereinbart wurde.

Zum Austauschen von Daten zwischen elektronischen Ausrüstungen werden häufig zwei Arten von Protokollen verwendet: synchrone und asynchrone Protokolle.

Die synchronen Protokolle verwenden ein Taktsignal zur Bestimmung des Zeitpunktes, zu dem jedes Bit ausgesandt wird. Der Synchrontakt kann ein externes Signal zusätzlich zu dem Datenkanal sein. Dieses System weist den Nachteil auf, daß ein unabhängiger Kanal zur Übertragung dieses Taktes zwischen dem Schloß und dem elektronischen Schlüssel erforderlich ist, was im Hinblick auf die Kosten und den beschränkten Raumes bei dieser Art von Ausrüstungen zur Verfügung steht, nicht wünschenswert ist.

Der Synchrontakt kann auch ein Signal sein, das innerhalb jeder Ausrüstung erzeugt wird. Die Taktgeber der Ausrüstungen müssen während der Übertragung der Daten synchronisiert gehalten werden. Dieses System weist den Nachteil der Kosten für die erwähnten Taktgeber auf, die sehr präzise sein müssen, weil es erforderlich ist, eine einwandfreie Synchronisation während der Übertragung aller der Bits aufrechtzuerhalten.

Asynchrone Protokolle erfordern kein Taktsignal zur Bestimmung der Folge der Übertragung der Bits. Diese Protokolle übertragen die Bits in Gruppen von Bytes und beginnen jedes Byte mit einer Anfangsmarke des Bytes. Beim Empfang dieser Marke synchronisieren die beiden Ausrüstungen ihre internen Taktgeber und senden die Bits, die das Byte bilden, in synchroner Form entsprechend der Folge dieser Taktgeber. Der Vorteil dieser Systeme besteht darin, daß die Taktgeber für den Synchronismus der beiden Ausrüstungen lediglich während der Dauer der Übertragung eines Bytes synchronisiert gehalten werden müssen.

Die elektronischen Schlüssel sind autonome Systeme ohne Energiespeicher oder Batterien, und sie müssen irgendeine Form von Energie für ihre richtige Betriebsweise empfangen. Häufig wird ein Kabel für die Kommunikation der Daten nach dem genannten asynchronen Protokoll und ein weiteres Kabel für die Speisung des elektronischen Schlüssels verwendet, was im Hinblick auf den beschränkten zur Verfügung stehenden Raum bei elektronischen Schlüsseln nicht wünschenswert ist.

Der Erfindung liegt die Aufgabe zugrunde, ein Protokoll der eingangs genannten Art bzw. ein System mit einem elektronischen Schlüssel und Schlössern zu schaffen, bei dem der Schlüssel für seine Punktionsweise Energie von dem Kommunikationskanal selbst ableitet, ohne daß ein zusätzlicher Speisekanal erforderlich ist.

### Erläuterung der Erfindung und der Vorteile

Diese Aufgabe wird durch die im Anspruch 1 angegebenen Merkmale gelöst.

Vorteilhafte Ausgestaltungen und Weiterbildungen der Erfindung ergeben sich aus den Unteransprüchen.

Bei dem erfindungsgemäßen asynchronen Kommunikationsprotokoll für elektronische Schlüssel von Schlössern und Sicherheitssystemen wird der gleiche und einzige Kanal zur Übertragung des Taktes und der Daten (Bits) verwendet. Dieser einzige Kanal weist zwei Zustände auf, nämlich einen Ruhezustand und einen aktiven Zustand während der Kommunikation. Ein aktiver Impuls wird für die Anzeige des Beginns eines Bits verwendet, und es wird ein aktiver Impuls zur Anzeige der Übertragung eines 1-Bits verwendet, während ein Ruhezustand für die Übertragung eines 0-Bits verwendet wird. Der aktive Impuls besteht in dem Halten des Kommunikationskanals in dem aktiven Zustand für eine kurze Zeitperiode. Der Ruhezustand wird ausgenutzt, um die Ableitung von Energie von dem Kommunikationskanal zu ermöglichen. Der aktive Zustand behindert aufgrund seiner kurzen Dauer nicht die Aufrechterhaltung eines bestimmten Energiepegels, der für eine einwandfreie Funktionsweise der Ausrüstungen ausreicht, die mit dem Kommunikationskanal verbunden sind.

Vorzugsweise erfolgt während des aktiven Zustandes die Aufrechterhaltung der Energie über einen Kondensator, der die Spannung während der Zeit aufrechterhält, über die der aktive Impuls andauert.

Die Vorteile der vorliegenden Erfindung sind folgende:
- das Protokoll erfordert keinerlei Synchronisation eines internen Taktes mit den Ausrüstungen, die an der Kommunikation beteiligt sind.
- Dieses Protokoll erfordert keinen zusätzlichen Kanal zur Zuführung eines externen Taktsignals.
- Das Protokoll ermöglicht die Zuführung von Energie an eine der Ausrüstungen über den gleichen Kommunikationskanal und gleichzeitig während der Kommunikation.

### Zeichnungen und Bezugsziffern

Zum besseren Verständnis der Eigenart der vorliegenden Erfindung ist in den beigefügten Zeichnungen eine bevorzugte gewerbliche Ausführungsform gezeigt, die lediglich die Eigenart eines erläuternden und nicht beschränkenden Beispield hat.

Die Figur 1 zeigt die Sendeausrüstung (E), die mit der Empfangseinrichtung (R) über ein einziges Kommunikationskabel (C) verbunden ist.

Die Figur 2 zeigt den Beginn der Bits eines aktiven Impulses.

### Erläuterung einer bevorzugten Ausführungsform

Die vorliegende Erfindung beschreibt ein asynchrones Kommunikationsprotokoll für die Übertragung von Bits, das die Übertragung und die Ableitung von Energie ermöglicht, wobei der gleiche Kommunikationskanal verwendet wird.

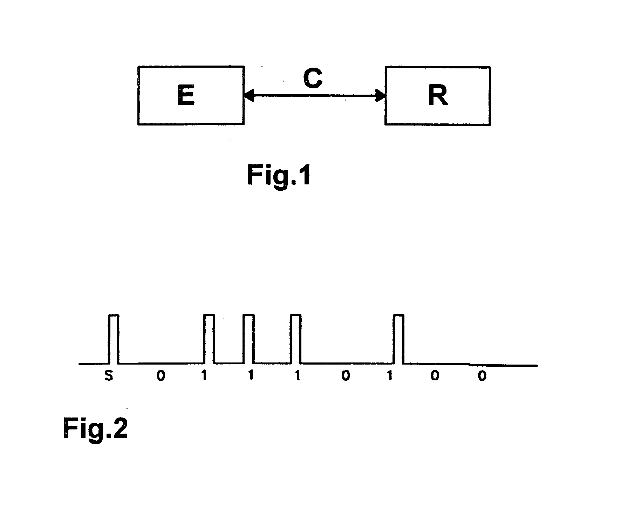

Es sind zwei elektronische Ausrüstungen in Form eines Senders (E) und eines Empfängers ® vorgesehen, die über einen einzigen Kommunikationskanal (C) (Figur 1) verbunden sind, und die beispielsweise dem Schloß bzw. dem elektronischen Schlüssel zugeordnet sind.

Der Kommunikationskanal ist in der Lage, zwei logische Pegel aufrechtzuerhalten, die als Ruhepegel und aktiver Pegel bezeichnet werden. Diese Zustände können einen beliebigen physikalischen Zustand zugeordnet werden, beispielsweise zwei Spannungspegeln, zwei Strompegeln, usw.

Während keine Kommunikation zwischen den beiden stattfindet, halten der Sender (E) und der Empfänger (R) den Kommunikationskanal (C) im Ruhezustand.

Wenn die Sendeeinrichtung ein Byte senden will, bringt der Sender den Kanal während einer kurzen Zeitperiode auf den aktiven Pegel, was als aktiver Impuls bezeichnet wird. Dieser aktive Impuls zeigt den Beginn eines Bytes an (Figur 2).

Nach der Aussendung des aktiven Startimpulses (s) für das Byte werden die Bits, die das Byte darstellen, mit einer vorgegebenen Zeitfolge (Bitzeit) ausgesandt:
- Wenn das auszusendende Bit ein 0-Bit ist, hält der Sender den Kanal während einer vorgegebenen Zeit (Bitzeit) im Ruhezustand.
- Wenn das auszusendende Bit ein 1-Bit ist, sendet der Sender während der Bitzeitperiode einen aktiven Impuls.

Der asynchrone Charakter dieses Systems beruht darauf, daß das folgende Byte zu einem beliebigen Zeitpunkt ausgesandt werden kann, nachdem das vorhergehende Byte beendet wurde.

Die Bitzeit kann fest sein und vorher zwischen den beiden Ausrüstungen vereinbart sein, oder sie kann automatisch durch Messen der Dauer der Bitperioden in einer vorgegebenen Folge der Bytes gemessen werden, die vor jeder Nachricht ausgesandt wurden.

Das vorgeschlagene System ermöglicht die Zuführung von Energie gleichzeitig zur Kommunikation. In diesem Fall ergeben sich zwei Beschränkungen hinsichtlich des vorgeschlagenen Systems:
- Der logische Ruhezustand des Kommunikationskanals (C) muß einem physikalischen Zustand zugeordnet sein, der in der Lage ist, Energie an ein elektrisches System zu liefern. Beispielsweise kann diesem Ruhezustand eine Spannung von 5 Volt derart zugeordnet sein, daß die Empfangsausrüstung diese Spannung ableiten und sie als Speisespannung verwenden kann.
- Der aktive logische Zustand des Kommunikationskanals (C) muß einem derartigen physikalischen Zustand zugeordnet sein, daß die Übergänge von dem Ruhezustand auf den aktiven Zustand die Zuführung von Energie an die Empfangsausrüstung nicht behindern. Beispielsweise kann dieser aktive Zustand einer Spannung von 0 Volt zugeordnet sein, und der aktive Impuls kann auf einige 30 Mikrosekunden festgelegt sein, derart, daß während dieser Zeit, in der der Kanal im aktiven Zustand bleibt, die Empfangsausrüstung keine Energie von diesem Kanal ableiten kann. Andererseits ist diese Zeit ausreichend kurz, damit die Energie in dieser Zeit von einer Einrichtung innerhalb der Empfangsausrüstung abgeleitet werden kann, beispielsweise von einem Kondensator, einer Batterie usw., die mit der Energie während der Ruhezustände geladen und während der aktiven Zustände entladen wird.

Da die aktive Impulsdauer sehr kurz sein kann, ist nur ein sehr kleiner Energiespeicher in dem elektronischen Schlüssel erforderlich, um die Energieversorgung während der Bitübertragung aufrecht zu erhalten.

## Patentansprüche

1. Asynchrones Kommunikationsprotokoll für elektronische Schlüssel von Schlössern und Sicherheitssystemen, **dadurch gekennzeichnet, daß** ein einziger Kanal zur Übertragung des Taktes und der Daten (Bits) verwendet wird, daß der Kanal einen normalen Ruhezustand und einen aktiven Zustand während der Kommunikation annehmen kann, daß ein aktiver Impuls zur Anzeige des Beginns eines Bits verwendet wird und ein aktiver Impuls zur Anzeige der Übertragung eines 1-Bits verwendet wird, während der Ruhezustand für die Übertragung eines 0-Bits verwendet wird, daß der aktive Impuls in dem Halten des Kommunikationskanals im aktiven Zustand während eines kurzen Zeitraums besteht, und daß der Ruhezustand die Ableitung von Energie aus dem Kommunikationskanal ermöglicht, wobei ein aktiver Zustand nicht die Aufrechterhaltung eines bestimmten Energiepegels behindert, der für die einwandfreie Funktionsweise der mit dem Kommunikationskanal verbundenen Ausrüstungen ausreicht.

2. Asynchrones Kommunikationsprotokoll nach Anspruch 1, **dadurch gekennzeichnet, daß** während des aktiven Zustandes die Aufrechterhaltung der Energie über einen Kondensator verwirklicht wird, der die Spannung während der Zeit aufrechterhält, während der der aktive Impuls andauert.

3. Asynchrones Kommunikationsprotokoll nach Anspruch 1 oder 2, **dadurch gekennzeichnet, daß** jeder aktive Impuls eine Dauer im Bereich von 30 Mikrosekunden hat.

4. Asynchrones Kommunikationsprotokoll nach einem der Ansprüche 1 - 3,
**dadurch gekennzeichnet, daß** auf dem Kommunikationskanal der Ruhezustand einem Pegel von etwa 5 V entspricht, während der aktive Zustand einem Pegel von etwa 0 V entspricht.
